# EUROPEAN PATENT APPLICATION

(11) **EP 3 211 542 A1**
(43) Date of publication of application: **30.08.2017**
(21) Application number: 15853300.0
(22) Date of filing: 10.10.2015
(51) Int. Cl.: G06F 17/30

(54) **PICTURE DOWNLOADING METHOD FOR CLIENT AND DEVICE THEREOF**

(30) Priority: 23.10.2014 CN 201410572749
(71) Applicant: Alibaba Group Holding Limited, Grand Cayman (KY)
(72) Inventor: LU, Jiawu, Hangzhou Zhejiang 311121 (CN)
(74) Representative: Finnegan Europe LLP
(86) International application number: PCT/CN2015/091692
(87) International publication number: WO 2016/062202

(57) **Abstract**

Embodiments of the disclosure relate to a field of communication, and provide a method and device for downloading pictures at a client terminal. The method includes: simultaneously downloading, by the client terminal, according to a received downloading request, a first picture corresponding to a picture characteristic value in the downloading request and text information corresponding to a text characteristic value in the downloading request; determining whether the first picture and a second picture that has been pre-stored in a server and corresponds to the text information, are derived from a same picture; and downloading, by the client terminal, the second picture from the server if the first picture and the second picture are not derived from the same picture and the client terminal has not downloaded the second picture in advance, and displaying only the text information and the second picture on the client terminal.

## Description

### TECHNICAL FIELD

The disclosure relates to a field of communications, and in particular to a method and a device for downloading pictures at a client terminal.

### BACKGROUND

In an application that has to illustrate pictures and text information simultaneously, such as an application for a shopping website, text information is generally downloaded first, and then a picture with relatively high resolution is downloaded according to the text information. There is a certain time difference between text display and picture display, which affects the display effect. In order to improve the display effect, a picture and text information may be downloaded simultaneously. However, an identifier of the picture may be tampered, therefore causing a trade dispute. For example, in order to promote sales, a merchant may share a commodity information link to other websites or application programs. When the text information is downloaded before the picture is downloaded, even if the identifier of the picture is modified during the downloading period, it can still be determined, according to the text information downloaded first, whether the downloaded picture matches the text (e.g., a corresponding relationship exists between the text information and the picture). However, if the text information and the picture are downloaded simultaneously, the matching determining cannot be made if someone modifies the identifier of the picture during the downloading period, therefore causing a trade dispute.

### SUMMARY

An objective of the present invention is to provide a method and a device for downloading pictures at a client terminal. The method and device can improve the information acquisition speed of the picture and text for a user, and can prevent malicious tampering with picture characteristics in a downloading request, thereby preventing, for example, a trade dispute during online shopping.

In order to solve the foregoing technical problem, an embodiment of the present disclosure provides a method for downloading pictures at a client terminal, including:
simultaneously downloading, by the client terminal, according to a received downloading request, a first picture corresponding to a picture characteristic value in the downloading request and text information corresponding to a text characteristic value in the downloading request;
determining whether the first picture and a second picture that has been pre-stored in a server and corresponds to the text information, are derived from a same picture; and
downloading, by the client terminal, the second picture from the server if the first picture and the second picture are not derived from the same picture and the client terminal has not downloaded the second picture in advance, and displaying only the text information and the second picture on the client terminal.

An embodiment of the present disclosure further provides a device for downloading pictures at a client terminal, including:
a first downloading unit, used for controlling the client terminal to simultaneously download, according to a received downloading request, a first picture corresponding to a picture characteristic value in the downloading request and text information corresponding to a text characteristic value in the downloading request;
a first determining unit, used for determining whether the first picture and a second picture that has been pre-stored in a server and corresponds to the text information, are derived from a same picture; and
a first display unit, used for controlling the client terminal to download the second picture from the server if the first picture and the second picture are not derived from the same picture and the client terminal has not downloaded the second picture in advance, and displaying only the text information and the second picture on the client terminal.

Compared with the prior art, the embodiments of the present disclosure have the following main differences and effects.

When a user needs to acquire information by browsing text information and a corresponding picture on a client terminal, the information acquisition speed of the user can be improved by simultaneously downloading the text information and a picture with high enough resolution. Moreover, by determining whether a picture corresponding to a picture characteristic value in a downloading request corresponds to the text information, malicious tampering with picture characteristics in the downloading request can be prevented, thereby preventing, for example, a trade dispute during online shopping.

Further, if the bandwidth is sufficient, the information acquisition speed of the user can be improved by loading text information and picture information simultaneously. However, if the amount of occupied bandwidth affects transmission of basic information of the client terminal, the text information may be loaded first, and then the picture information is loaded, to reduce influences on acquisition of the text information or other information caused by network congestion.

Further, if the bandwidth is sufficient, the information acquisition speed of the user can be improved by downloading text information and picture information simultaneously. However, if the amount of occupied bandwidth affects transmission of basic information of the client, the text information may be downloaded first, and then the picture information is downloaded, to reduce influences on acquisition of the text information or other information caused by network congestion.

### BRIEF DESCRIPTION OF THE DRAWINGS

**FIG. 1** is a schematic flow chart of a method for downloading pictures at a client terminal, according to a first implementation of the disclosure.
**FIG. 2** is a schematic structural diagram of a device for downloading pictures at a client terminal, according to a second implementation of the disclosure.

### DETAILED DESCRIPTION

In the following description, technical details are provided to facilitate a reader to better understand embodiments of the disclosure. However, those ordinary skilled in the art may understand that the technical solution that the claims of the present disclosure seek to protect may also be implemented even without these technical details, and based on various changes and modifications according to the following implementations.

In order to make the objectives, technical solutions, and advantages of the present disclosure clearer, embodiments of the present disclosure will be further described in detail below with reference to the accompanying drawings.

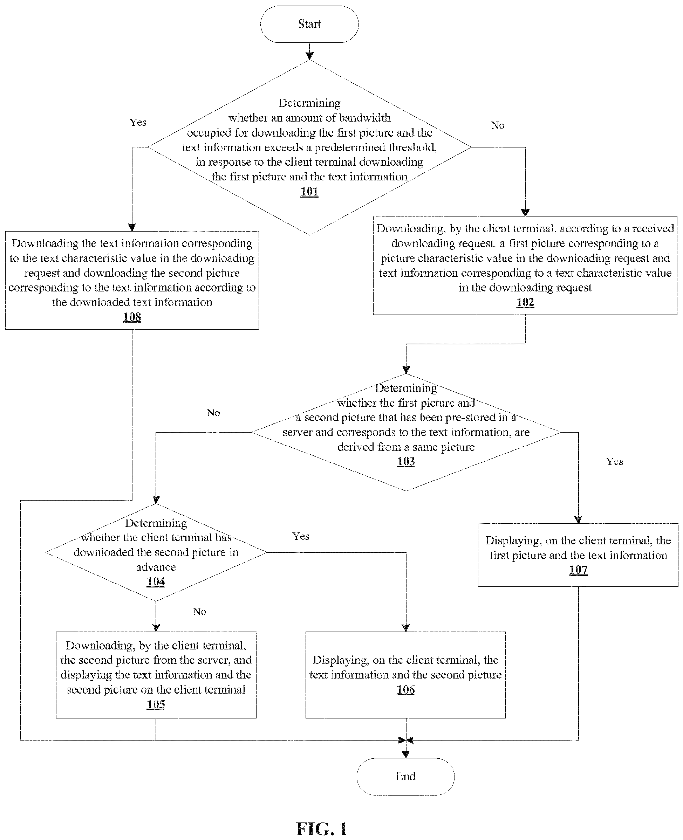

A first implementation of the disclosure relates to a method for downloading pictures at a client terminal. **FIG. 1** is a schematic flow chart of a method for downloading pictures at a client terminal.

For example, as shown in **FIG. 1****,** the method for downloading pictures at a client terminal may include the following steps of 101-108.

In step 101, it is determined whether an amount of bandwidth occupied for downloading a first picture and text information exceeds a predetermined threshold, if a client terminal downloads the first picture and the text information.

If the determining result is Yes, step 108 is performed; otherwise, step 102 is performed.

If the bandwidth is sufficient, loading text information and picture information simultaneously may improve the information acquisition speed of the user. However, if the amount of occupied bandwidth affects transmission of basic information of the client terminal, it may load the text information first and then load the picture information, so as to reduce influences on acquisition of the text information or other information caused by network congestion. In embodiments of the disclosure, the amount of occupied bandwidth may be a fixed value, or may be a percentage value of total bandwidth.

In step 102, the client terminal simultaneously downloads, according to a received downloading request, a first picture corresponding to a picture characteristic value in the downloading request and text information corresponding to a text characteristic value in the downloading request, wherein the picture characteristic value refers to an identifier of a picture in a server. And different pictures having an identical image, displaying identical content, and having different resolution or sizes may have the same picture characteristic value.

Subsequently, step 103 is performed to determine whether the first picture and a second picture that has been pre-stored in a server and corresponds to the text information, are derived from a same picture.

If the determining result is Yes, step 107 is performed; otherwise, step 104 is performed.

In step 104, it is determined whether the client terminal has downloaded the second picture in advance, and if the judgment result is Yes, step 106 is performed; otherwise, step 105 is performed.

In embodiments of the disclosure, the client terminal may have downloaded the second picture in advance, or may have downloaded a thumbnail, of which the resolution is lower than that of the second picture but the characteristic value is the same as that of the second picture. Therefore, it is determined whether the client terminal has downloaded the second picture in advance. For example, it is first determined whether their characteristic values are the same. If yes, it is determined whether the resolution or size of the downloaded picture is equal to or greater than that of the second picture. And if the resolution or size is equal to or greater than that of the second picture, the currently downloaded picture is displayed as the second picture.

In step 105, the client terminal downloads the second picture from the server, and only the text information and the second picture are displayed on the client terminal. Then, the procedure ends.

In step 106, only the text information and the second picture are directly displayed on the client terminal. Then, the procedure ends.

In step 107, the first picture and the text information are displayed on the client terminal. Then, the procedure ends.

In step 108, text information corresponding to the text characteristic value in the downloading request is downloaded, and a second picture corresponding to the text information is downloaded according to the downloaded text information. Then, the procedure ends.

In addition, in a preferred example of this implementation, after step 103, the method may further include deleting the downloaded first picture if the judgment result of step 103 is No.

In addition, it can be understood that, in other implementations of the present invention, the downloaded first picture may not be deleted, and a format of the first picture may be set as hidden, so the first picture is not displayed on the client terminal.

In addition, in a preferred example of the present invention, step 102 may include the following sub-steps of:
extracting a uniform resource locator (URL) of a picture in the downloading request, for example, acquiring the URL through a regular expression;
performing calculation on the URL to obtain a picture characteristic value;
adding resolution information or size information of the first picture to the obtained picture characteristic value, to form an updated URL of the picture; and
downloading the first picture according to the updated URL of the picture.

For example, a URL of a picture is:
http://gwl.alicdn.com/XXX/uploaded/i4/TB1LA3rFVXXXXb6XFXXXX XXXXXX_!!0-item_pic.jpg_210×210.jpg;
By performing calculation on the URL, a picture characteristic value can be obtained:
TB1LA3rFVXXXXb6XFXXXXXXXXXX_!!0-item_pic.jpg.

Then, size information of a to-be-loaded picture is written into the picture characteristic value to form a new URL of the picture for picture downloading (e.g., a picture size or resolution value in the URL is substituted).

It can be understood that, in some embodiments of the disclosure, a URL of a picture includes a characteristic value, resolution information, size information, and the like of the picture, and a picture having a specific size and/or resolution can be downloaded according to the URL.

In addition, it can be understood that, in other implementations of the present invention, characteristic values may also be extracted according to a two-dimensional code scanned by a client.

In addition, in another preferred example of the present invention, step 103 may be implemented by:
comparing whether picture characteristic values of the first picture and the second picture are the same; or
comparing whether headers of data packets of the first picture and the second picture are the same, for example, comparing whether Etag or data lengths in the headers are the same, wherein Etag is an Entity Tag of a URL, for indicating whether a URL object has changed; or
comparing, based on picture matching, whether a similarity between contents displayed in the first picture and the second picture reaches a predetermined similarity value.

In addition, in the present invention, if there are multiple pictures corresponding to the text information, when the client terminal has downloaded the second picture, other corresponding pictures except the second picture can be downloaded.

In addition, it can be understood that, in the present invention, two or more pictures derived from a same picture have an identical image and an identical picture characteristic value, but have different resolution, sizes, and the like. For example, in one embodiment of the disclosure, they have different URLs.

In addition, it can be understood that, in some embodiments of the disclosure, the text characteristic value is identifier information of a particular set of text, which is stored in the server and used for describing specific information.

In the implementations of the present invention, the downloading request may be obtained in various forms, such as a website or a two-dimensional code scanning. For example, after a user clicks on a website link or scans a two-dimensional code, the client terminal may receive the downloading request.

When a user needs to acquire information by browsing text information and a corresponding picture on a client terminal, the information acquisition speed of the user can be improved by simultaneously downloading the text information and a picture with high enough resolution. Moreover, by determining whether a picture corresponding to a picture characteristic value in a downloading request corresponds to the text information, malicious tampering with picture characteristics in the downloading request can be prevented, thereby preventing, for example, a trade dispute during online shopping.

Various method embodiments of the disclosure can all be implemented by means of software, hardware, firmware, and the like. No matter whether embodiments of the disclosure are implemented by means of software, hardware, or firmware, an instruction code may be stored in any type of computer accessible memories (for example, a permanent or modifiable, volatile or non-volatile, solid-state or non-solid-state, fixed or removable media and so on). Similarly, the memory may be, for example, a Programmable Array Logic (PAL), a Random Access Memory (RAM), a Programmable Read Only Memory (PROM), a Read-Only Memory (ROM), an Electrically Erasable Programmable ROM (EEPROM), a magnetic disk, an optical disc, or a Digital Versatile Disc (DVD) and so on.

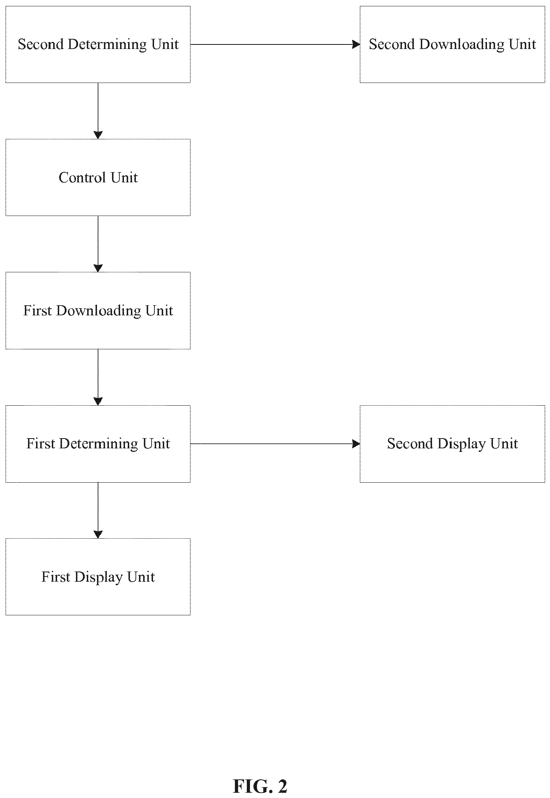

A second implementation of the disclosure relates to a device for downloading pictures at a client terminal. **FIG. 2** is a schematic structural diagram of the device for downloading pictures at a client terminal.

As shown in **FIG. 2****,** the device for downloading pictures at a client terminal may include:
a second determining unit, used for determining whether an amount of bandwidth occupied for downloading a first picture and text information exceeds a predetermined threshold, if a client terminal downloads the first picture and the text information;
a second downloading unit, used for downloading text information corresponding to a text characteristic value in a downloading request and downloading a second picture corresponding to the text information according to the downloaded text information if the amount of bandwidth occupied for downloading the first picture and the text information exceeds the predetermined threshold;
a control unit, used for controlling a first downloading unit to download the first picture and the text information if the judgment result of the second judgment unit is No;
the first downloading unit, used for controlling the client terminal to simultaneously download, according to a received downloading request, a first picture corresponding to a picture characteristic value in the downloading request and text information corresponding to a text characteristic value in the downloading request;
a first determining unit, used for determining whether the first picture and the second picture that has been pre-stored in a server and corresponds to the text information, are derived from a same picture;
a first display unit, used for controlling the client terminal to download the second picture from the server when the judgment result of the first judgment unit is No and the client terminal has not downloaded the second picture in advance, and displaying only the text information and the second picture on the client terminal; and
a second display unit, used for directly displaying only the text information and the second picture on the client terminal when the judgment result of the first judgment unit is No and the client terminal has downloaded the second picture in advance.

In a preferred example of the present invention, the first downloading unit includes the following subunits:
a locator extracting subunit, used for extracting a URL of a picture in the downloading request;
a characteristic value calculating subunit, used for performing calculation on the URL to obtain a picture characteristic value;
a locator updating subunit, used for adding resolution information or size information of the first picture to the obtained picture characteristic value, to form an updated URL of the picture; and
a picture downloading subunit, used for downloading the first picture according to the updated URL of the picture.

In addition, the device for downloading pictures at a client terminal further includes the following unit:
a deleting unit, used for deleting the downloaded first picture after the judgment result of the first judgment unit is No.

The first implementation is a method implementation corresponding to this implementation, and this implementation can be carried out in cooperation with the first implementation. Related technical details mentioned in the first implementation are still effective in this implementation, and are not omitted herein. Accordingly, related technical details mentioned in this second implementation may also be applied in the first implementation.

It should be noted that the units mentioned in each device implementation of the disclosure are logical units. Physically, one logical unit may be a physical unit or may be a part of a physical unit, and may also be implemented by a combination of multiple physical units. The physical implementation of these logical units are not the most important, while a combination of functions implemented by these logical units is the key to solve the technical problem proposed in the present invention. In addition, in order to emphasize the innovative part of the present invention, the above device implantations of the present invention do not introduce units that are not closely related to the technical problem proposed in the present invention, but this does not mean that no other units exist in the above device implementations.

It should be noted that the relational terms such as "first" and "second" in the claims and specification of the present patent are only used to differentiate an entity or operation from another entity or operation, and do not require or imply any actual relationship or sequence between these entities or operations. Moreover, the terms "include", "comprise", or any other variants thereof are intended to cover a non-exclusive inclusion, such that a process, a method, an object, or a device that includes a series of elements not only includes such elements but also includes other elements not specified expressly, or may further include inherent elements of the process, method, object, or device. In the absence of more restrictions, an element limited by "include a/an..." does not exclude other same elements existing in the process, method, object, or deice that includes the element.

Although the present invention has been illustrated and described with reference to some embodiments of the present invention, those of ordinary skill in the art should understand that various modifications can be made to the form and details of the present invention without departing from the spirit and scope of the present invention.

## Claims

1. A method for downloading pictures at a client terminal, comprising:
simultaneously downloading, by the client terminal, according to a received downloading request, a first picture corresponding to a picture characteristic value in the downloading request and text information corresponding to a text characteristic value in the downloading request;
determining whether the first picture and a second picture that has been pre-stored in a server and corresponds to the text information, are derived from a same picture; and
downloading, by the client terminal, the second picture from the server if the first picture and the second picture are not derived from the same picture and the client terminal has not downloaded the second picture in advance, and displaying only the text information and the second picture on the client terminal.

2. The method according to claim 1, wherein simultaneously downloading, by the client terminal, according to a received downloading request, a first picture corresponding to a picture characteristic value in the downloading request and text information corresponding to a text characteristic value in the downloading request further comprises:
extracting a uniform resource locator of a picture in the downloading request;
performing calculation on the uniform resource locator to obtain a picture characteristic value;
adding resolution information or size information of the first picture to the obtained picture characteristic value, to form an updated uniform resource locator of the picture; and
downloading the first picture according to the updated uniform resource locator of the picture.

3. The method according to claim 1, after determining whether the first picture and a second picture that has been pre-stored in a server and corresponds to the text information, are derived from a same picture, the method further comprising:
deleting the downloaded first picture, if the first picture and the second picture are not derived from the same picture.

4. The method according to claim 1, after determining whether the first picture and a second picture that has been pre-stored in a server and corresponds to the text information, are derived from a same picture, the method further comprising:
directly displaying only the text information and the second picture on the client terminal, if the first picture and the second picture are not derived from the same picture and the client terminal has downloaded the second picture in advance.

5. The method according to any of claims 1 to 4, before determining whether the first picture and a second picture that has been pre-stored in a server and corresponds to the text information, are derived from a same picture, the method further comprising:
determining whether an amount of bandwidth occupied for downloading the first picture and the text information exceeds a predetermined threshold, if the client terminal downloads the first picture and the text information;
executing a step of "simultaneously downloading, by the client terminal, according to a received downloading request, a first picture corresponding to a picture characteristic value in the downloading request and text information corresponding to a text characteristic value in the downloading request", if the predetermined threshold is not exceeded; and
downloading the text information corresponding to the text characteristic value in the downloading request and downloading the second picture corresponding to the text information according to the downloaded text information, if the predetermined threshold is exceeded.

6. A device for downloading pictures at a client terminal, comprising:
a first downloading unit, used for controlling the client terminal to simultaneously download, according to a received downloading request, a first picture corresponding to a picture characteristic value in the downloading request and text information corresponding to a text characteristic value in the downloading request;
a first determining unit, used for determining whether the first picture and a second picture that has been pre-stored in a server and corresponds to the text information, are derived from a same picture; and
a first display unit, used for controlling the client terminal to download the second picture from the server if the first picture and the second picture are not derived from the same picture and the client terminal has not downloaded the second picture in advance, and displaying only the text information and the second picture on the client terminal.

7. The device according to claim 6, wherein the first downloading unit further comprises:
a locator extracting subunit, used for extracting a uniform resource locator of a picture in the downloading request;
a characteristic value calculating subunit, used for performing calculation on the uniform resource locator to obtain a picture characteristic value;
a locator updating subunit, used for adding resolution information or size information of the first picture to the obtained picture characteristic value, to form an updated uniform resource locator of the picture; and
a picture downloading subunit, used for downloading the first picture according to the updated uniform resource locator of the picture.

8. The device according to claim 6, further comprising:
a deleting unit, used for deleting the downloaded first picture after the first determining unit determines the first picture and the second picture are not derived from the same picture.

9. The device according to claim 6, further comprising:
a second display unit, used for directly displaying only the text information and the second picture on the client terminal when the first picture and the second picture are not derived from the same picture and the client terminal has downloaded the second picture in advance.

10. The device according to any of claims 6 to 9, further comprising:
a second determining unit, used for determining whether an amount of bandwidth occupied for downloading the first picture and the text information exceeds a predetermined threshold, if the client terminal downloads the first picture and the text information;
a control unit, used for controlling the first downloading unit to download the first picture and the text information if the amount of bandwidth occupied for downloading the first picture and the text information does not exceeds the predetermined threshold; and
a second downloading unit, used for downloading the text information corresponding to the text characteristic value in the downloading request and downloading the second picture corresponding to the text information according to the downloaded text information if the amount of bandwidth occupied for downloading the first picture and the text information exceeds the predetermined threshold.
